# EUROPÄISCHE PATENTSCHRIFT

(11) **EP 3 485 076 B1**
(45) Veröffentlichungstag und Bekanntmachung des Hinweises auf die Patenterteilung: **02.11.2022**
(21) Anmeldenummer: 17737574.8
(22) Anmeldetag: 11.07.2017
(51) Int. Cl.: D06F 33/37, D06F 33/36, D06F 103/00, D06F 103/22, D06F 105/42, D06F 39/02, D06F 34/22, D06F 103/20

(54) **REINIGUNGSMITTELIDENTIFIKATION**
CLEANING AGENT IDENTIFICATION
IDENTIFICATION DE PRODUIT DE NETTOYAGE

(30) Priorität: 15.07.2016 DE 102016212985
(43) Veröffentlichungstag der Anmeldung: 22.05.2019
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); WAWER, Georg, 1040 Wien (AT); MÜLLER, Alexander, 40789 Monheim (DE)
(86) Internationale Anmeldenummer: PCT/EP2017/067334
(87) Internationale Veröffentlichungsnummer: WO 2018/011171

(56) Entgegenhaltungen:
- DE-A1- 10 039 408
- DE-A1-102007 011 119
- DE-U1- 20 115 173
- US-A1- 2010 161 143
- US-A1- 2013 175 292
- US-B1- 7 754 025

## Beschreibung

### Gebiet der Erfindung

Die Erfindung betrifft Verfahren und Vorrichtungen, welche der Identifikation eines Reinigungsmittels für eine Reinigungsvorrichtung dienen können oder sich die Identifikation zunutze machen können.

### Hintergrund der Erfindung

Aus dem Stand der Technik ist es unter anderem bekannt, einen Waschprozess durch eine Detektion des im Waschvorgang oder in der Waschphase vorhandenen Waschmittels zu verbessern, beispielsweise durch Anpassung der Dosierung.

So ist beispielsweise aus der DE 10 2007 011 119 A1 eine Waschmaschine mit einer automatischen Regelung des Waschprozesses unter Verwendung farbempfindlicher optischer Sensoren zur Erfassung steuerungsrelevanter Messwerte bekannt. Wesentlich ist, dass während der Waschphase der gesamte Spektralbereich vom Infrarot bis ins Ultraviolett mittels einer optischen Sensoreinrichtung messtechnisch erfasst wird oder Teile aus dem Spektrum, die für die Aufgabe charakteristisch sind. Durch den Zusatz von speziellen Farbstoffen, die den Zustand der Wäsche nicht negativ beeinflussen, lässt sich jedem Waschmittel ein bestimmter farblicher Zustand messtechnisch zuordnen. Hierdurch wird es möglich, das Waschmittel zu identifizieren und z. B. die Art des Waschmittels zu erkennen sowie den Hersteller.

Aus der DE 42 04 806 A1 ist ein Waschverfahren für gewerbliche Wäschereien bekannt, wobei unterschiedliche Waschmittel im gleichen Waschgang, aber in unterschiedlichen Waschstufen in die Flotte eindosiert werden. Um beim Einsatz mehrerer unterschiedlicher Waschmittel in der gleichen Flotte deren Konzentrationen einzeln zu bestimmen, wird vorgeschlagen, dass man Waschmittel bzw. Bleichmittel einsetzt, die bei Einstrahlung von Licht Fluoreszenzstrahlung jeweils unterschiedlicher Wellenlängenbereiche emittieren, dass man Licht über Lichtwellenleiter an in der Flotte befindliche Messorte bringt, das dort emittierte Licht auffängt und mit dem gleichen oder einem zweiten Lichtwellenleiter einer Empfangs- und Auswerteeinheit zuführt, die Intensitäten der Fluoreszenzstrahlung in einem oder mehreren der unterschiedlichen Wellenlängenbereiche detektiert und daraus über eine mit den eingesetzten Wasch- bzw. Bleichmitteln vorgenommene Kalibrierung deren Konzentrationen in der Flotte ermittelt.

Dokument US2013175292 A1 beschreibt ein Verfahren zur Überprüfung der Kompatibilität einer Kartusche mit einer Aufnahme der Kartusche in einem Haushaltsgerät durch Lesen von Informationen, die auf einem Strichcode der Kartusche gespeichert sind. Dokument DE 201 215 173 U1 beschreibt ein Verfahren zur Identifizierung des Inhalts eines Behälters eines Reinigungsmittels durch das Lesen eines auf dem Behälter angebrachten Identifikationscodes. Dokument US2010161143 A1 beschreibt eine austauschbare Dosiereinheit für eine Waschmaschine, die beim Einsetzen durch einen Barcode oder RFID-Tag identifiziert werden kann.

Aus der WO 2015/165733 A2 ist zudem ein Dosiersystem zur dosierten Abgabe von in Gebinden gelagerten chemischen Substanzen an eine Geschirrspülmaschine oder Waschmaschine bekannt, welches zumindest ein mit dem Gebinde verbindbares Spendergerät, eine Logik zur Steuerung des Betriebs des zumindest einen Spendergeräts und der Geschirrspülmaschine oder Waschmaschine, sowie ein Benutzer-Interface mit einem Display und Tasten zur Bedienung der Logik umfasst. Das Dosiersystem ist modular aufgebaut. Die Logik ist in eine in jedem Spendergerät enthaltene Spenderlogikeinheit und in eine Maschinenlogikeinheit unterteilt, die die Spülmaschine oder Waschmaschine überwacht und steuert.

Aus der DE 100 39 408 B4 ist weiterhin eine Haushaltsmaschine zum Reinigen von Gegenständen, insbesondere Waschmaschine oder Geschirrspüler, bekannt, wobei eine Vorrichtung zur Erfassung wenigstens eines Parameters des verwendeten Waschmittels bzw. Reinigers vorgesehen ist. Der Parameter ist die Menge und/oder der Aggregatzustand, die Sorte und/oder ein Wirkstoff des verwendeten Waschmittels bzw. Reinigers. Dies kann dazu dienen die Dosierung zu verbessern oder den Programmablauf zu beeinflussen, um das Waschergebnis zu verbessern.

Allerdings sind die vorgeschlagenen Verfahren und Vorrichtung in Bezug auf die Identifikation eines Reinigungsmittels weiterhin verbesserungsbedürftig. Zudem kann es trotz der Identifikation eines Waschmittels oder der Dosierung des Waschmittels während der Waschphase zu unerwünschten Waschmittelverwendungen oder Dosierungen kommen.

Allgemeine Beschreibung einiger beispielhafter Ausführungsformen der Erfindung Vor diesem Hintergrund liegt der Erfindung die Aufgabe zugrunde, die genannten Nachteile aus dem Stand der Technik zumindest teilweise zu reduzieren oder zu vermeiden, das heißt insbesondere eine benutzerfreundliche Bedienung für den Benutzer zu erreichen und/oder eine verbesserte Identifikation eines Reinigungsmittels zu ermöglichen.

Gemäß einem ersten Aspekt der Erfindung wird ein Verfahren, durchgeführt von zumindest einer Vorrichtung, beschrieben, wobei das Verfahren umfasst: Erhalten einer Identifikationscharakteristik eines Reinigungsmittels, und Prüfen, zumindest teilweise basierend auf der erhaltenen Identifikationscharakteristik des Reinigungsmittels, ob ein Initiieren eines Reinigungsvorgangs einer Reinigungsvorrichtung mit dem Reinigungsmittel zulässig ist.

Die Vorrichtung zur Durchführung des Verfahrens gemäß dem ersten Aspekt kann beispielsweise eine Vorrichtung gemäß dem ersten Aspekt sein. Beispielsweise ist die Vorrichtung die Reinigungsvorrichtung oder eine Datenverarbeitungsanlage, beispielsweise ein Mobilgerät oder ein Server.

Eine Reinigungsvorrichtung kann beispielsweise eine Waschmaschine oder eine Spülmaschine sein. Die Reinigungsvorrichtung ist insbesondere eine (automatische) Haushaltsreingungsmaschine, beispielsweise eine Haushaltswaschmaschine.

Die Waschmaschine kann in verschiedenen Ausgestaltungsformen vorliegen. Man unterscheidet Toplader, bei denen die Ladeluke an der Oberseite liegt, und Frontlader, bei denen ein Bullauge als Ladeluke an der Vorderseite dient. Vorteil des Topladers ist, dass die Abdichtung der Tür einfacher ausgeführt und die Trommel auf zwei Seiten durch Wälzlager abgestützt sein kann, ein Toplader lässt sich auch in sehr engen Räumen aufstellen, wo nicht genügend Platz zum Öffnen einer vorderen Tür zur Verfügung steht. Ein Frontlader hingegen bietet auf der Oberseite Platz für z. B. einen Wäschetrockner oder für eine Arbeitsfläche und wird deswegen gelegentlich anstelle eines Unterschranks in eine Küchenzeile eingebaut. Toplader sind nachteilig, da sie mehr Wasservolumen für die Wäschereinigung als Frontlader benötigen.

Die amerikanischen Toplader haben immer eine rotierende Trommel und Mischelemente (Agitator oder Discs), wobei sich die Mischelemente mit oder gegen die Trommeldrehrichtung bewegen können. Die Maschinen können eine Laugenumwälzung und Sprühvorrichtungen für die Lauge aufweisen. Grundsätzlich werden Deep Fill und HE-Toploader unterschieden. Deep Fill Toplader arbeiten mit vorgegebenen Wasserniveaus, haben also keine Beladungserkennung. HE Maschinen verfügen in der Regel über eine Beladungserkennung und steuern danach die Wassermengen. In der Regel haben die Maschinen keine eingebaute Heizung, sondern werden an Warmwasser angeschlossen.

Ein Reinigungsmittel kann beispielsweise ein Waschmittel oder ein (Geschirr-)Spülmittel sein. Ein Reinigungsmittel kann jedoch nicht nur das die eigentliche Reinigung bewirkende Mittel sondern ebenfalls auch ein Reinigungshilfsmittel oder Reinigungszusatzmittel sein, wie beispielsweise ein Bleichzusatzmittel, ein Weichspüler oder Wäschestärke. Ein Reinigungsmittel kann eine Flüssigkeit, ein disperses System, zum Beispiel ein Gel oder Schaum, oder ein Feststoff, insbesondere ein Tab, Pulver oder Granulat, sein.

Ein Reinigungsmittel kann beispielsweise eine oder mehrere Komponenten aus der Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine aufweisen.

Ein Reinigungsmittel kann ferner einen oder mehrere weitere Bestandteile umfassen. Diese Bestandteile schließen ein, sind aber nicht beschränkt auf die Gruppe bestehend aus Bleichaktivatoren, Komplexbildnern, Gerüststoffen, Elektrolyten, nichtwässrigen Lösungsmitteln, pH-Stellmitteln, Parfümträgern, Fluoreszenzmitteln, Hydrotropen, Silikonölen, Bentoniten, Antiredepositionsmitteln, Einlaufverhinderern, Knitterschutzmitteln, Farbübertragungsinhibitoren, Füllstoffen, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- und Imprägniermitteln, Quell- und Schiebefestmitteln sowie UV-Absorbern.

Ein Reinigungsvorgang kann beispielsweise eine automatische, insbesondere zumindest teilweise vordefinierte Abfolge von Reinigungsstufen oder Reinigungsgängen umfassen. Insbesondere im Falle eines Waschvorgangs, kann ein Reinigungsvorgang beispielsweise einen oder mehrere Hauptreinigungsgänge, einen oder mehrere Spülgänge und/oder einen oder mehrere Schleudergänge umfassen. Das Reinigungsmittel wird im Falle eines Hauptwaschmittels beispielsweise für einen Hauptreinigungsgang, im Falle eines Weichspülers für einen Spülgang verwendet.

Unter einem Initiieren eines Reinigungsvorgangs wird insbesondere ein Starten oder Beginnen eines Reinigungsvorgangs verstanden. Ein Initiieren eines Reinigungsvorgangs kann beispielsweise automatisch oder manuell durch einen Benutzer (beispielsweise mittels einer Benutzerschnittstelle, beispielsweise eine Benutzerschnittstelle der Reinigungsvorrichtung) ausgelöst werden.

Unter einer Identifikationscharakteristik eines Reinigungsmittels wird insbesondere eine Information (oder diese Information repräsentierende Daten) verstanden, welche charakteristisch für das Reinigungsmittel oder eine Gruppe von Reinigungsmitteln ist. Dies kann ermöglichen, das Reinigungsmittel mithilfe der Identifikationscharakteristik zu identifizieren, eine Gruppe von Reinigungsmitteln zu identifizieren, der das Reinigungsmittel zuzuordnen ist und/oder von anderen Reinigungsmitteln oder einer anderen Gruppe von Reinigungsmitteln zu unterscheiden. Eine Identifikationscharakteristik kann zumindest ein Charakteristikum (oder auch mehrere Charakteristika) umfassen. Ein Charakteristikum (oder auch Merkmal) kann insofern insbesondere repräsentativ für eine ermittelbare, das Reinigungsmittel von anderen Reinigungsmitteln unterscheidende Eigenschaft des Reinigungsmittels angesehen werden. Eine Identifikationscharakteristik kann insbesondere als ein Fingerabdruck oder Fingerprint des Reinigungsmittels angesehen werden.

Durch ein Prüfen, ob ein Initiieren eines Reinigungsvorgangs einer Reinigungsvorrichtung mit dem Reinigungsmittel zulässig ist, kann bei Bedarf auf das Initiieren eines Reinigungsvorgangs eingewirkt werden. Beispielsweise kann verhindert werden, dass eine (beispielsweise unbeabsichtigte) Benutzung der Reinigungsvorrichtung mit unzulässigen Reinigungsmitteln erfolgt. Ebenfalls kann die Benutzung mit zulässigen Reinigungsmitteln gestattet werden. Ein Reinigungsmittel wird beispielsweise als zulässig betrachtet, wenn das Reinigungsmittel für einen Reinigungsvorgang mit dem Reinigungsmittel erwünscht oder geeignet ist. Dadurch, dass ein Prüfen beispielsweise nicht erst während des Reinigungsvorgangs, also etwa während einer Waschphase, erfolgt, sondern bereits ein Prüfen einer Zulässigkeit eines Initiierens eines Reinigungsvorgangs erfolgt, kann die Benutzerfreundlichkeit der Bedienung der Reinigungsvorrichtung verbessert werden. Zudem kann erreicht werden, dass beispielsweise weiterhin die Qualität des Reinigungsvorgangs verbessert und/oder die Lebensdauer der Reinigungsvorrichtung gesteigert wird, da beispielsweise nur zulässig angesehene Reinigungsmittel zum Einsatz kommen.

Darunter, dass das Prüfen zumindest teilweise auf der erhaltenen Identifikationscharakteristik basiert, wird beispielsweise verstanden, dass die erhaltene Identifikationscharakteristik herangezogen wird, um die Zulässigkeit eines Initiierens eines Reinigungsvorgangs zu prüfen. Ebenfalls können hierzu weitere Informationen herangezogen werden.

Gemäß einer Ausgestaltung des Verfahrens gemäß dem ersten Aspekt umfasst das Verfahren weiterhin: ein Unterbinden des Initiierens des Reinigungsvorgangs mit dem Reinigungsmittel, falls das Prüfen ergibt, dass das Initiieren des Reinigungsvorgangs der Reinigungsvorrichtung mit dem Reinigungsmittel unzulässig ist, und/oder ein Initiieren oder Ermöglichen des Initiierens des Reinigungsvorgangs mit dem Reinigungsmittel, falls das Prüfen ergibt, dass das Initiieren des Reinigungsvorgangs der Reinigungsvorrichtung mit dem Reinigungsmittel zulässig ist.

Ein Unterbinden eines Initiierens eines Reinigungsvorgangs mit dem Reinigungsmittel kann beispielsweise dadurch erfolgen, dass ein automatisches oder manuelles Initiieren des Reinigungsvorgangs nicht möglich ist und/oder ignoriert wird. Beispielsweise wird ein Initiieren eines Reinigungsvorgangs zumindest zeitweise unterbunden. Ein Initiieren oder Ermöglichen eines Initiierens eines Reinigungsvorgangs mit dem Reinigungsmittel kann beispielsweise dadurch erfolgen, dass ein automatisches oder manuelles Initiieren des Reinigungsvorgangs erfolgt oder freigeschaltet wird.

Beispielsweise ergibt das Prüfen, dass ein Initiieren eines Reinigungsvorgangs einer Reinigungsvorrichtung mit dem Reinigungsmittel unzulässig ist, wenn nicht festgestellt wird oder nicht festgestellt werden kann, dass die erhaltene Identifikationscharakteristik des Reinigungsmittels einer vorgegebenen Bedingung genügt (beispielsweise einer bestimmten Identifikationscharakteristik entspricht). Beispielsweise ergibt das Prüfen, dass ein Initiieren eines Reinigungsvorgangs einer Reinigungsvorrichtung mit dem Reinigungsmittel zulässig ist, wenn festgestellt wird, dass die erhaltene Identifikationscharakteristik des Reinigungsmittels einer vorgegebenen Bedingung genügt (beispielsweise einer bestimmten Identifikationscharakteristik entspricht).

Wird der Reinigungsvorgang initiiert oder ein Initiieren ermöglicht, kann dies insofern als ein (erfolgreicher) "Handshake" zwischen dem Reinigungsmittel und der Reinigungsvorrichtung angesehen werden, bevor der eigentliche Reinigungsvorgang beginnt.

Falls das Prüfen ergibt, dass das Initiieren des Reinigungsvorgangs der Reinigungsvorrichtung mit dem Reinigungsmittel zulässig ist, kann diese Information beispielsweise dazu benutzt werden, dem Benutzer einen Rabatt oder eine Gutschrift einzuräumen. Beispielsweise wird eine Information, repräsentativ für die Verwendung eines zulässigen Reinigungsmittels durch einen Benutzer an einen Server gesendet, sodass dem Benutzer ein entsprechender Rabatt oder eine Gutschrift eingeräumt werden kann. Hierzu kann der Benutzer beispielsweise ein Benutzerkonto besitzen. Das Benutzerkonto kann beispielsweise die Verwendung von zulässigen Reinigungsmitteln protokollieren. Der Rabatt kann beispielsweise ein Punkterabatt sein, bei dem über bisherige Verwendungen des zulässigen Reinigungsmittels anteilig akkumulierte Bonuspunkte in Preisnachlässe für künftige Käufe oder in Prämien umgesetzt werden.

Gemäß einer Ausgestaltung des Verfahrens gemäß dem ersten Aspekt umfasst das Verfahren weiterhin ein Vergleichen der erhaltenen Identifikationscharakteristik des Reinigungsmittels mit zumindest einer Referenzcharakteristik.

Das Ergebnis des Vergleichs kann für das Prüfen, on das Initiieren des Reinigungsvorgangs der Reinigungsvorrichtung mit dem Reinigungsmittel zulässig ist, verwendet werden. Wird beispielsweise festgestellt, dass die erhaltene Identifikationscharakteristik und zumindest eine Referenzcharakteristik identisch oder (ausreichend) ähnlich sind, kann hieraus gefolgert werden, dass ein Initiieren eines Reinigungsvorgangs der Reinigungsvorrichtung zulässig oder unzulässig ist.

In Bezug auf eine Referenzcharakteristik wird auf die Ausführungen zur Identifikationscharakteristik verwiesen. Entsprechend kann unter einer Referenzcharakteristik eine Informationen (oder diese Information repräsentierende Daten) verstanden werden, welche charakteristisch für ein Referenz-Reinigungsmittel oder eine Gruppe von Referenz-Reinigungsmitteln ist.

Zum Vergleichen der Identifikationscharakteristik mit einer oder mehrere Referenzcharakteristiken können unterschiedliche Vergleichsmethoden verwendet werden. Beispielsweise kann ein Vergleich mittels einer Ähnlichkeitsanalyse erfolgen, beispielsweis auf Basis eines oder mehrerer künstlicher neuronaler Netzwerke. Ein weiteres Beispiel ist die Verwendung einer Support Vector Machine (SVM). Eine Support Vector Machine unterteilt eine Menge von Objekten so in Klassen, dass um die Klassengrenzen herum ein möglichst breiter Bereich frei von Objekten bleibt. Auf diese Weise können Reinigungsmittel oder zugehörige Identifikationscharakteristiken oder Referenzcharakteristiken in Klassen oder Gruppen eingeteilt werden. Die Identifikationscharakteristik und/oder die Referenzcharakteristik kann also ein Vektor oder Support Vektor sein. Auf diese Weise kann die erhaltene Identifikationscharakteristik mit einer oder mehreren Referenzcharakteristiken verglichen werden und so das Reinigungsmittel identifiziert werden oder einer Gruppe zugeordnet werden.

Gemäß einer Ausgestaltung des Verfahrens gemäß dem ersten Aspekt umfasst das Verfahren ein mehrmaliges Erhalten (und/oder Ermitteln) von Identifikationscharakteristiken von Reinigungsmitteln. Die Identifikationscharakteristiken können beispielsweise dazu genutzt werden, ein Benutzerprofil zu erstellen. In einem derartigen Benutzerprofil können die Identifikationscharakteristiken oder daraus abgeleitete Informationen mit weiteren Informationen (beispielsweise mit der Anzahl und/oder des jeweiligen Alters der Personen eines Haushalts zur Erstellung eines persönlichen Verbrauchsprofils oder beispielsweise mit der Jahreszeit zur Erstellung eines jahreszeitlichen Verbrauchsprofils) assoziiert werden. Aus einem derartigen Profil können dann Aussagen über ein zukünftiges Verhalten (beispielsweise der erwartete Reinigungsmittelverbrauch) des Benutzers abgeleitet werden.

Die Identifikationscharakteristiken können insbesondere für ein maschinelles Lernen genutzt werden. So kann beispielsweise die Referenzcharakteristik zumindest teilweise basierend auf maschinellem Lernen bestimmt werden. Ebenfalls können die beschriebenen Schritte des Prüfens und/oder Vergleichens auf maschinell Gelerntes zurückgreifen. Unter einem maschinellen Lernen wird verstanden, dass ein künstliches System (zum Beispiel eine Vorrichtung gemäß dem ersten Aspekt oder ein System gemäß dem ersten Aspekt) aus Beispielen lernt und diese nach Beendigung der Lernphase verallgemeinern kann. Das heißt, es werden nicht einfach die Beispiele auswendig gelernt, sondern es werden Muster und Gesetzmäßigkeiten in den Lerndaten erkannt. Hierzu können unterschiedliche Ansätze verfolgt werden. Beispielsweise kann ein überwachtes Lernen, ein teilüberwachtes Lernen, ein unüberwachtes Lernen, ein bestärktes Lernen und/oder ein Aktives Lernen eingesetzt werden. Ein überwachtes Lernen kann beispielsweise mittels eines künstlichen neuronalen Netzes (etwa einem rekurrenten neuronalen Netz) oder mittels einer Support Vector Machine erfolgen. Auch ein unüberwachtes Lernen kann beispielsweise mittels eines künstlichen neuronales Netzes (beispielsweis eines Autoencoders) erfolgen. Als Lerndaten dienen dann beispielsweise insbesondere die mehrmalig erhaltenen und/oder ermittelten Identifikationscharakteristiken.

Durch diese Maßnahmen kann die Zuverlässigkeit eines Prüfens oder Vergleichens erhöht werden oder weitere Aussagen aus den erhaltenen Informationen abgeleitet werden.

Gemäß des erfindungsgemäßen Verfahrens gemäß dem ersten Aspekt umfasst das Verfahren weiterhin ein Ermitteln der Identifikationscharakteristik des Reinigungsmittels. Das Ermitteln erfolgt durch eine Sensoreinrichtung.

Beispielsweise umfasst die Sensoreinrichtung zum Ermitteln der Identifikationscharakteristik des Reinigungsmittels zumindest einen optischen Sensor. Beispielsweise umfasst der optische Sensor zumindest eine Photodiode und optional einen Leuchtdiode. Beispielsweise umfasst der optische Sensor ein Spektrometer (beispielsweise ein UV/VIS-Spektrometer). Beispielsweise ist der optische Sensor zur Detektion einer Absorption oder Emission des Reinigungsmittels eingerichtet (beispielsweise eines Absorptions- und/oder Emissionsspektrums). Beispielsweise ist der optische Sensor zur Detektion von sichtbarer oder nicht-sichtbarer elektromagnetischer Strahlung eingerichtet. Beispielsweise ist der optische Sensor zur Detektion von UV-Strahlung, beispielsweise UV-A-, UV-B- und/oder UV-C-Strahlung eingerichtet. Beispielsweise ist der Sensor zur Detektion von Infrarot-Strahlung, beispielsweise von NIR-, MIR und/oder FIR-Strahlung eingerichtet.

Beispielsweise umfasst der der die Sensoreinrichtung einen hyperspektralen Sensor, beispielsweise eine hyperspektrale Kamera. Hiermit können hyperspektrale Bilder erhalten werden. Dabei weist Intensitätsverteilung des Bilds Intensitätswerte in mehreren Kanälen für verschiedene Energieintervalle aufweist, wobei mindestens zwei der Energieintervalle aneinander anschließen oder überlappen. Insbesondere kann ein hyperspektrales Bild von einem multispektralen Bild darin abgegrenzt werden, dass ein multispektrales Bild zwar ebenfalls Intensitätswerte in mehreren Kanälen für verschiedene Energieintervalle aufweist, wobei jedoch die Energieintervalle voneinander beabstandet liegen, d.h. bei einem multispektralen Bild werden Intensitäten von einzelnen, voneinander abgegrenzten Energien wiedergegeben. Dagegen werden bei einem hyperspektralen Bild insbesondere "benachbarte" Intensitätswerte wiedergegeben, indem mindestens zwei der Energieintervalle aneinander anschließen oder überlappen. Ein hyperspektrales Bild kann somit zumindest teilweise ein kontinuierliches Spektrum wiedergeben. Eine Intensitätsverteilung repräsentativ für ein hyperspektrales Bild hat insbesondere den Vorteil, dass auch für das Auge nicht sichtbare Informationen, die zur Identifikationscharakteristik beitragen können, festgehalten werden können.

Die Sensoreinrichtung umfasst zum Ermitteln der Identifikationscharakteristik des Reinigungsmittels zumindest einen Schall-Sensor, beispielsweise einen Ultraschall-Sensor.

Alternativ umfasst die Sensoreinrichtung zumindest einen Leitfähigkeitssensor. Ein Leitfähigkeitssensor kann der Messung der elektrischen Leitfähigkeit des Reinigungsmittels dienen. Ein Leitfähigkeitssensor umfasst beispielsweise zwei (oder mehr) Elektroden. Diese sind bevorzugt so angeordnet, dass sie bei gewöhnlicher Verwendung eines Reinigungsmittels mit dem Reinigungsmittel in Kontakt kommen können.

Alternativ umfasst die Sensoreinrichtung zum Ermitteln der Identifikationscharakteristik des Reinigungsmittels zumindest einen Gassensor, beispielsweise einen elektrochemischen Sensor. Beispielsweise ist der Gassensor zur Detektion von Riechstoffen oder Riechstoffkompositionen ausgebildet. Beispielsweise basiert die ermittelte Identifikationscharakteristik auf der Intensität, dem zeitlichem Verlauf, dem Anstiegsverhalten und/oder dem Abklingverhalten eines Sensorsignals. Da ein Gassensor häufig nur einen oder wenige Inhaltsstoffe detektieren kann, ist es vorteilhaft, mehr als einen Gassensor, beispielsweise ein Sensorarray unterschiedlicher Gassensoren vorzusehen.

Beispielsweise umfasst die Sensoreinrichtung eine Kombination unterschiedlicher Sensoren (beispielsweise ein optischer Sensor und ein Leitfähigkeitssensor).

Beispielsweise umfasst die Sensoreinrichtung zumindest einen Softsensor oder virtuellen Sensor. Unter einem Softsensor wird kein real existierender Sensor, sondern eine Abhängigkeitssimulation von stellvertretenden Messgrößen zu einer Zielgröße verstanden. Somit wird die Zielgröße nicht direkt gemessen, sondern anhand zu ihr korrelierender Messgrößen und eines Modells der Korrelation berechnet.

Gemäß einer Ausgestaltung des Verfahrens gemäß dem ersten Aspekt erfolgt das Ermitteln der Identifikationscharakteristik durch zumindest eine Sensoreinrichtung einer Reinigungsvorrichtung oder eines Teils hiervon oder einer Dosierhilfe.

Beispielsweise ist die Sensoreinrichtung oder ein Teil hiervon in die Reinigungsvorrichtung integriert oder integrierbar. Beispielsweise ist die Sensoreinrichtung oder ein Teil hiervon in die Reinigungsvorrichtung eingebaut. Beispielsweise ist die Sensoreinrichtung oder ein Teil hiervon in eine Einspülkammer, eine Vorratskammer und/oder ein (automatisches) Dosiersystem der Reinigungsvorrichtung integriert.

Beispielsweise ist die Sensoreinrichtung in eine Dosierhilfe integriert. Die Dosierhilfe dient der Dosierung des Reinigungsmittels. Beispielsweise ist die Dosierhilfe als Messvorrichtung (etwa als Messbehältnis) ausgebildet.

Gemäß einer Ausgestaltung des Verfahrens gemäß dem ersten Aspekt umfasst das Verfahren weiterhin ein Erhalten der Referenzcharakteristik. Beispielsweise kann die Referenzcharakteristik durch die das Verfahren gemäß dem ersten Aspekt durchführenden Vorrichtung, das heißt beispielsweise die Reinigungsvorrichtung oder eine Datenverarbeitungsanlage (beispielsweise ein Mobilgerät), empfangen werden und/oder gespeichert werden. Beispielsweise werden die Daten von einem Server gesendet.

Gemäß einer Ausgestaltung des Verfahrens gemäß dem ersten Aspekt erlaubt die Identifikationscharakteristik eine Identifikation des Reinigungsmittels und/oder einer Reinigungsmittelgruppe.

Unter einer Identifikation des Reinigungsmittels wird verstanden, dass ein Reinigungsmittel beispielsweise als ein Produkt von identischen Produkten identifiziert werden kann. Beispielsweise erlaubt die erhaltene Identifikationscharakteristik eine eindeutige Identifikation des Reinigungsmittels.

Unter einer Identifikation einer Reinigungsmittelgruppe wird insbesondere verstanden, dass eine Reinigungsmittelgruppe identifiziert werden kann, der das Reinigungsmittel zugeordnet werden kann. Beispielsweise bilden Reinigungsmittel eines Herstellers eine Reinigungsmittelgruppe, sodass das Reinigungsmittel mittels der Identifikationscharakteristik einem Reinigungsmittelhersteller zugeordnet werden kann. Dies ist vorteilhaft, wenn die Reinigungsvorrichtung beispielsweise nur mit Reinigungsmittel eines Herstellers verwendet werden soll. Beispielsweise bilden Reinigungsmittel einer Art eine Reinigungsmittelgruppe, sodass das Reinigungsmittel mittels der Identifikationscharakteristik einer Reinigungsmittelart zugeordnet werden kann (beispielsweise Textilwaschmittel, Buntwaschmittel, Bleichmittel, Weichspüler, etc.). Beispielsweise bilden Reinigungsmittel für einen Verwendungszweck eine Reinigungsmittelgruppe, sodass das Reinigungsmittel mittels der Identifikationscharakteristik einem Reinigungsmittelzweck zugeordnet werden kann (beispielsweise Waschen von Textilien, Waschen von Buntwäsche, Bleichen, Weichspülen etc.).

Gemäß einer Ausgestaltung des Verfahrens gemäß dem ersten Aspekt ist die Identifikationscharakteristik repräsentativ für zumindest eine chemische und/oder physikalische Eigenschaft des Reinigungsmittels.

Eine physikalische Eigenschaft des Reinigungsmittels kann beispielsweise eine spektrale Eigenschaft (beispielsweise eine Farbe, ein Absorptions- und/oder Emissionsspektrum), eine Dichte, eine Wärmeleitfähigkeit, eine elektrische Leitfähigkeit, eine magnetische Permeabilität oder Remanenz, ein Aggregatzustand (fest, flüssig, gasförmig) bei einer bestimmten Temperatur, eine optische Aktivität, eine Viskosität, eine Oberflächenspannung, eine Wärmekapazität und/oder eine Schallgeschwindigkeit sein.

Eine chemische Eigenschaft kann beispielsweise ein Geruch, eine Reaktivität gegenüber verschiedenen anderen Stoffen, ein pH-Wert, eine Säurekonstante und/oder eine Basenkonstante sein.

Zum Ermitteln einer physikalischen und/oder chemischen Eigenschaft des Reinigungsmittels kann ein entsprechender Sensor zur Ermittlung der entsprechenden physikalischen und/oder chemischen Eigenschaft vorgesehen sein.

Zur Verbesserung der Identifikation kann die Identifikationscharakteristik beispielsweise zumindest repräsentativ für eine erste und eine zweite Eigenschaft des Reinigungsmittels sein.

Gemäß einer Ausgestaltung des Verfahrens gemäß dem ersten Aspekt ist die Identifikationscharakteristik repräsentativ für eine spektrale Eigenschaft und/oder eine elektrische Leitfähigkeit des Reinigungsmittels. Es hat sich gezeigt, dass eine spektrale Eigenschaft und eine elektrische Leitfähigkeit bei Reinigungsmitteln schnell, genau und robust ermittelt werden kann eine sichere Identifikation des Reinigungsmittels bzw. einer Reinigungsmittelgruppe ermöglicht.

Gemäß einer Ausgestaltung des Verfahrens gemäß dem ersten Aspekt enthält das Reinigungsmittel einen oder mehrere Zusätze zum Herbeiführen der Identifikationscharakteristik.

Unter einem Zusatz wird insbesondere ein Inhaltsstoff des Reinigungsmittels verstanden, welcher zur eigentlichen Funktion des Reinigungsmittels nicht notwendig ist und/oder die eigentliche Funktion nicht oder nur unwesentlich beeinträchtigt. Insbesondere ist der Zusatz zur Herstellung, Lagerung, Verarbeitung oder zur Erzielung der Wirksamkeit des Reinigungsmittels nicht notwendig.

Der Zusatz ermöglicht jedoch insbesondere ein Einstellen einer bestimmten Identifikationscharakteristik, sodass insbesondere eine Identifikation des Reinigungsmittels oder der Reinigungsmittelgruppe möglich ist. Allerdings ist es möglich, dass der Zusatz gleichzeitig eine vorteilhafte oder erwünschte Wirkung in Bezug auf die Herstellung, Lagerung, Verarbeitung oder die Wirksamkeit hat.

Gemäß einer Ausgestaltung des Verfahrens gemäß dem ersten Aspekt umfassen der eine oder die mehrere Zusätze: einen chemischen Marker, einen Farbstoff, einen funktionellen Farbstoff, einen Riechstoff, und/oder einen die Leitfähigkeit ändernden Stoff.

Unter einem chemischen Marker wird insbesondere ein Zusatz verstanden, welcher eine insbesondere eindeutige Identifikation des Reinigungsmittels ermöglicht. Ein chemischer Marker kann beispielsweise ein Farbstoff, ein Stoff zur Erzeugung einer spezifischen Absorptionseigenschaft (insbesondere einer Absorptionsbande) oder ein Stoff zur Erzeugung einer spezifischen Emission (beispielsweise einer Fluoreszenz) sein. Die Absorption und/oder Emission kann dabei beispielsweise im sichtbaren oder nicht sichtbaren Teil des elektromagnetischen Spektrums liegen.

Ein chemischer Marker kann beispielsweise ein Filterfarbstoff, ein Lichtschutzfilter, insbesondere ein UV-Schutzfilter, beispielsweise Octinoxat ((E,RS)-4-Methoxyzimtsäure-2-ethylhexylester) sein. Unter einem funktionellen Farbstoff wird ein Stoff verstanden, der bei seiner Anwendung eine bestimmte Funktion erfüllt, die jedoch in der Regel nicht auf einer ästhetischen Farbgebung beruht. Das heißt, seine Farbe ist für die Anwendung in der Regel irrelevant, oder sie wird für einen Zweck eingesetzt, der nichts damit zu tun haben braucht, ein Substrat optisch attraktiver zu machen. Beispiele für funktionelle Farbstoffe sind etwa Farbstoffe, die Licht bei einer bestimmten Wellenlänge absorbieren und das absorbierte Licht in Wärme umwandeln, das Licht bei einer anderen Wellenlänge wieder emittieren (etwa als phosphoreszierende Marker), die Polarisationsrichtung des Lichts verändern, elektrische Phänomene bewirken oder fotochemische Prozesse ermöglichen.

Beispiele für funktionelle Farbstoffe sind die unter den folgenden CAS-Nummern (Chemical Abstracts Service) registrierten chemischen Stoffe: 536-17-4, 28172-08-9, 6813-38-3, 54389-98-9, 121482-73-3, 76433-27-7, 905-96-4, 70024-44-1, 25152-49-2, 137147-59-2, 131443-20-4, 189189-12-6, 206439-63-6 ,4182-80-3 ,155795-24-7, 62669-60-7, 215370-93-7, 326801-92-7, 599177-24-9, 28705-46-6, 94856-25-4, 663161-10-2, 207399-07-3, 777816-94-1, 28984-20-5, 38951-97-2, 143193-48-0, 92050-35-6, 27969-56-8, 19381-50-1, 101708-53-6, 50663-19-9, 63148-97-0, 41503-61-1, 77837-26-4, 143269-53-8, 117898-57-4, 103534-62-9, 77418-33-8, 977-96-8, 52525-52-7, 2602-17-7, 51257-37-5, 143269-69-6, 34330-15-9, 2445-60-5, 144940-73-8, 35501-76-9, 32634-36-9, 52525-55-0, 28784-39-6, 23216-67-3, 67326-80-1, 60760-42-1, 33628-03-4, 105176-22-5, 35795-44-9, 52749-17-4, 203785-75-5, 63811-40-5, 152340-26-6, 88358-74-1, 7696-70-0, 5496-71-9, 113869-06-0, 27425-55-4, 90-33-5, 91-44-1, 41267-76-9, 55804-66-5, 38465-55-3, 7385-67-3, 89846-21-9, 13558-31-1, 62669-66-3, 989-38-8, 24796-94-9, 87-01-4, 50378-83-1, 17636-08-7, 28118-05-0, 143174-04-3 ,91101-24-5 ,51858-17-4 ,143269-64-1 ,86213-20-9, 143269-62-9, 117133-81-0, 63524-66-3 ,24139-57-9, 131512-74-8, 20328-87-4, 93857-83-1, 61105-57-5, 101-75-7, 6935-44-0, 3695-85-0, 115324-57-7, 253267-46-8, 253267-38-8, 1064-48-8, 99610-72-7, 112078-08-7, 123174-58-3, 331861-93-9, 1510824-40-4, 494762-23-1, 68239-70-3, 177168-18-2, 147613-95-4.

Ein Riechstoff kann beispielsweise ein natürlicher oder synthetischer Riechstoff sein.

Unter einem die Leitfähigkeit beeinflussenden Stoff wird insbesondere ein gezielt die Leitfähigkeit beeinflussenden Stoff verstanden. Beispielsweise kann ein Salz ein die Leitfähigkeit ändernder Stoff sein.

Gemäß einer Ausgestaltung des Verfahrens gemäß dem ersten Aspekt umfasst das Verfahren weiterhin: Initiieren oder Ermöglichen des Initiierens des Reinigungsvorgangs mit dem Reinigungsmittel, nachdem ein Unterbinden des Initiierens des Reinigungsvorgangs mit dem Reinigungsmittel erfolgt ist.

Beispielsweise wird zunächst ein Initiieren des Reinigungsvorgangs mit dem Reinigungsmittel unterbunden, da das Prüfen ergeben hat, dass ein Initiieren des Reinigungsvorgangs mit dem Reinigungsmittel nicht zulässig ist. Um jedoch dem Benutzer die Möglichkeit zu geben, etwa im Notfall auch mit einem unerwünschten Reinigungsmittel einen Reinigungsvorgang oder einen nicht für das Reinigungsmittel vorgesehene Reinigungsvorgang zu initiieren, kann anschließend trotzdem ein Initiieren oder Ermöglichen eines Initiierens des Reinigungsvorgangs mit dem Reinigungsmittel erfolgen. Dies kann als Override-Funktion angesehen werden.

Gemäß des erfindungsgemäßen Verfahrens gemäß dem ersten Aspekt umfasst das Verfahren weiterhin ein Prüfen einer Kompatibilität des Reinigungsmittels mit dem zu initiierenden Reinigungsvorgang oder mindestens einem Parameter hiervon zumindest teilweise basierend auf der erhaltenen Identifikationscharakteristik.

Ein Parameter des zu initiierenden Reinigungsvorgangs ist beispielsweise die Temperatur (im Falle einer Waschmaschine beispielsweise 30°C, 60°C, 90°C) und/oder das Reinigungsprogramm (im Falle einer Waschmaschine beispielsweise Pflegeleicht, Koch-/Buntwäsche, Feinwäsche, etc.). Durch die erhaltene Identifikationscharakteristik kann das Reinigungsmittel oder die Reinigungsmittelgruppe, der das Reinigungsmittel zuzuordnen ist, identifiziert werden. Beispielsweise können weitere mit dem identifizierten Reinigungsmittel oder der identifizierten Reinigungsmittelgruppe assoziierte Informationen (beispielsweise Kompatibilitätsinformationen, welche repräsentativ für die mit dem Reinigungsmittel kompatiblen Reinigungsvorgänge oder Parameter hiervon sind) erhalten werden.

Das Prüfen, ob das Initiieren des Reinigungsvorgangs der Reinigungsvorrichtung mit dem Reinigungsmittel zulässig ist, kann dann auf dem Prüfen der Kompatibilität beruhen. Wird eine Kompatibilität festgestellt, kann daraus auf eine Zulässigkeit des Initiierens des Reinigungsvorgangs der Reinigungsvorrichtung mit dem Reinigungsmittel geschlossen werden. Wird hingegen eine Inkompatibilität festgestellt, kann daraus auf eine Unzulässigkeit des Initiierens des Reinigungsvorgangs der Reinigungsvorrichtung mit dem Reinigungsmittel geschlossen werden. Auch in diesem Fall basiert das Prüfen zumindest teilweise auf der erhaltenen Identifikationscharakteristik des Reinigungsmittels.

Gemäß einer Ausgestaltung des Verfahrens gemäß dem ersten Aspekt umfasst das Verfahren weiterhin ein Prüfen und/oder Beeinflussen des Reinigungsvorgangs der Reinigungsvorrichtung mit dem Reinigungsmittel, zumindest teilweise basierend auf der erhaltenen Identifikationscharakteristik des Reinigungsmittels.

Beispielsweise kann ein Beeinflussen eines Reinigungsvorgangs eine Beeinflussung der Temperatur (im Falle einer Waschmaschine beispielsweise 30°C, 60°C, 90°C) und/oder des Reinigungsprogramms (im Falle einer Waschmaschine beispielsweise Pflegeleicht, Koch-/Buntwäsche, Feinwäsche, etc.) umfassen. Als weiteres Beispiel kann ein Beeinflussen eines Reinigungsvorgangs eine Beeinflussung der verwendeten Wassermenge umfassen.

Gemäß einer Ausgestaltung des Verfahrens gemäß dem ersten Aspekt umfasst das Verfahren weiterhin ein Prüfen und/oder Beeinflussen einer Dosierung des Reinigungsmittels, zumindest teilweise basierend auf der erhaltenen Identifikationscharakteristik des Reinigungsmittels. Beispielsweise wird die Dosierung bei einer in die Reinigungsvorrichtung integrierten automatischen Dosierung automatisiert angepasst. Bei einer manuellen Dosierung kann beispielsweise eine Dosierempfehlung ausgegeben oder eine Ausgabe hiervon ausgelöst werden, beispielsweise durch die Reinigungsvorrichtung und/oder eine Datenverarbeitungsanlage (beispielsweise ein Mobilgerät des Benutzers). Hierzu kann beispielsweise eine Dosierhilfe mit einem Sensor versehen sein, welcher die Menge des darin befindlichen Reinigungsmittels ermittelt. Die darin befindliche Menge kann dann überprüft werden. Wie bereits ausgeführt, kann durch die erhaltene Identifikationscharakteristik das Reinigungsmittel oder die Reinigungsmittelgruppe, der das Reinigungsmittel zuzuordnen ist, identifiziert werden, sodass beispielsweise eine Dosierinformation (zum Beispiel repräsentativ für eine Dosiermatrix) für das Reinigungsmittel erhalten werden kann. Die Dosierinformation kann eine Information über eine empfohlene Dosierung des Reinigungsmittels in Abhängigkeit von einer Wasserhärte, einer Menge der zu reinigenden Objekte (z.B. einer Wäschemenge) und/oder einer Verschmutzung umfassen.

Die Menge der zu reinigenden Objekte kann beispielsweise durch einen Sensor der Reinigungsvorrichtung ermittelt werden. Das Prüfen und/oder Beeinflussen einer Dosierung des Reinigungsmittels kann dann auch auf der Menge der zu reinigenden Objekte basieren. Beispielsweise ist weiterhin denkbar, dass eine Positionsinformation, welche repräsentativ für die Position des Benutzers oder der Reinigungsvorrichtung ist, erhalten wird. Hieraus kann beispielsweise eine Information über die Wasserhärte an dieser Position erhalten werden. Das Prüfen und/oder Beeinflussen einer Dosierung des Reinigungsmittels kann dann auch auf der Information über die Wasserhärte basieren.

Gemäß dem ersten Aspekt wird auch eine Vorrichtung beschrieben, welche dazu eingerichtet ist oder entsprechende Mittel umfasst, ein Verfahren nach dem ersten Aspekt durchzuführen und/oder zu steuern.

Ebenfalls wird gemäß dem ersten Aspekt eine Vorrichtung beschrieben umfassend eine Sensoreinrichtung, zumindest einen Prozessor und zumindest einen Speicher mit Computerprogrammcode, wobei der zumindest eine Speicher und der Computerprogrammcode dazu eingerichtet sind, mit dem zumindest einen Prozessor, zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem ersten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Die Datenverarbeitungsanlage kann beispielsweise die Reinigungsvorrichtung oder ein Teil hiervon sein. Weitere Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Das heißt, es können beispielsweise alle oder einzelne Verfahrensschritte, welche beispielswiese nicht unbedingt durch die Reinigungsvorrichtung durchgeführt werden müssen, von einer weiteren Vorrichtung vorgenommen werden, welche insbesondere über ein Kommunikationssystem mit der Reinigungsvorrichtung, in Verbindung stehen kann. Eine solche weitere Vorrichtung kann beispielswiese ein Server sein und beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem ersten Aspekt wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
Fig. 1 eine schematische Darstellung eines Ausführungsbeispiels eines Systems gemäß der Erfindung;
Fig. 2a eine schematische Darstellung eines Ausführungsbeispiels einer Reinigungsvorrichtung;
Fig. 2b eine schematische Darstellung eines Ausführungsbeispiels einer Einspülkammer;
Fig. 2c eine schematische Darstellung eines Ausführungsbeispiels einer Dosierhilfe;
Fig. 3 ein Blockdiagramm eines Ausführungsbeispiels einer Vorrichtung gemäß der Erfindung;
Fig.4 ein Ablaufdiagramm eines Ausführungsbeispiels eines Verfahrens gemäß der Erfindung; und
Fig.5 unterschiedliche Ausführungsbeispiele eines Speichermediums.

### Detaillierte Beschreibung einiger beispielhafter Ausführungsformen der Erfindung

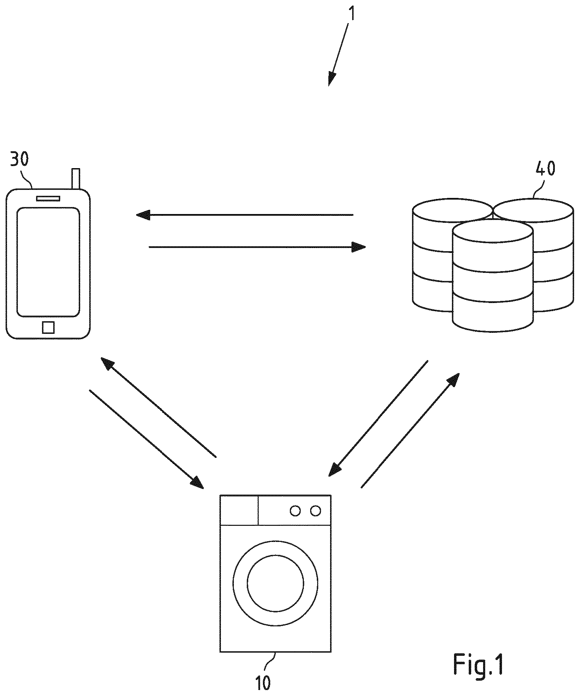

Fig. 1 zeigt zunächst ein beispielhaftes System 1 gemäß dem ersten Aspekt umfassend beispielhafte Vorrichtungen 10, 30, 40, welche jeweils eine Vorrichtung gemäß dem ersten Aspekt sein können.

Das System 1 umfasst einen beispielhaft dargestellte Reinigungsvorrichtung 10. Weiterhin umfasst das System 1 ein Mobilgerät 30 in Form eines Smartphones. Schließlich umfasst das System 1 einen Server 40, welcher insbesondere räumlich entfernt von der Reinigungsvorrichtung 10 und dem Mobilgerät 30 sein kann. Das System 1 kann jedoch auch nur zwei oder auch mehr als drei Vorrichtungen umfassen.

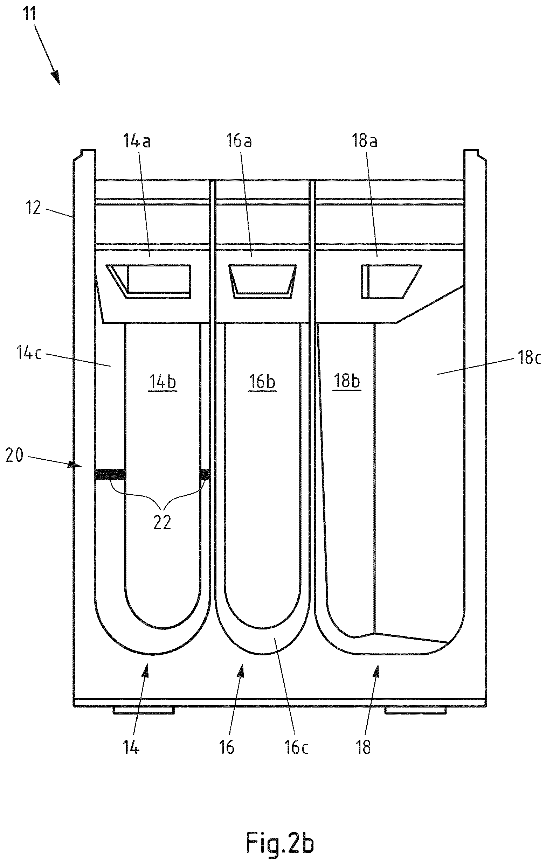

Die Reinigungsvorrichtung 10 kann eine Sensoreinrichtung 20 (siehe Fig. 2b) umfassen, welche dazu eingerichtet ist, eine Identifikationscharakteristik eines in die Reinigungsvorrichtung 10 eingefüllten Reinigungsmittels zu ermitteln.

Zudem kann die Reinigungsvorrichtung 10 eine Kommunikationsschnittstelle aufweisen, um mit dem Server 40 und/oder dem Mobilgerät 30 zu kommunizieren. Dementsprechend kann auch das Mobilgerät 30 eine Kommunikationsschnittstelle aufweisen, um Informationen mit der Reinigungsvorrichtung 10 und/oder dem Server 40 auszutauschen.

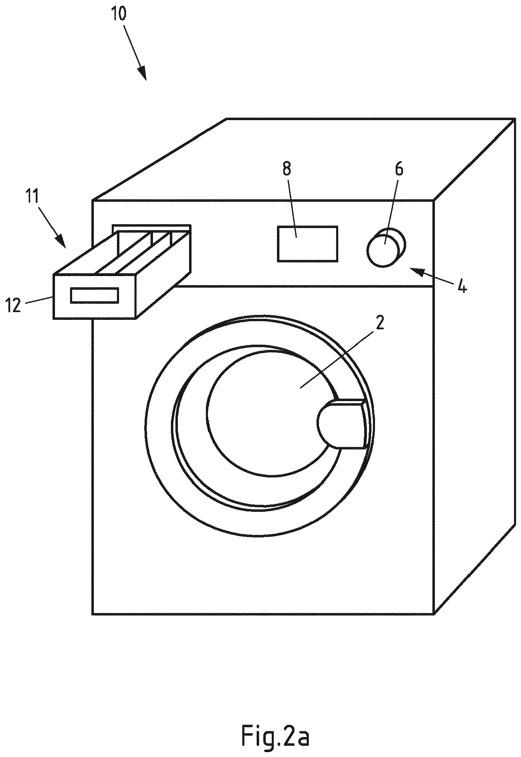

Fig. 2a zeigt die Reinigungsvorrichtung 10 aus Fig. 1. Die Reinigungsvorrichtung 10 kann ein Ausführungsbeispiel einer Vorrichtung des ersten Aspekts darstellen und insbesondere Ausführungsbeispiele des Verfahrens gemäß dem ersten Aspekt oder Teile hiervon durchführen. Die Reinigungsvorrichtung 10 ist in diesem Fall eine automatische Haushaltswaschmaschine für Textilien, welche als Trommelwaschmaschine ausgebildet ist, bei der sich eine Wäschetrommel 2 um eine horizontale Achse dreht (Frontlader). Ebenfalls ist jedoch die Verwendung anderer Arten von Reinigungsvorrichtungen denkbar. Die Waschmaschine 10 umfasst neben der Trommel 2 Benutzerschnittstellen 4 in Form eines Bedienelements 6 und eines Anzeigeelements 8. Das Bedienelement 6 ist als Drehknopf ausgebildet und kann der Einstellung unterschiedlicher Waschparameter, beispielsweise des Waschprogramms und der Waschtemperatur, dienen. Das Anzeigeelement 8 kann dem Benutzer Informationen optisch anzeigen. Allerdings kann die Waschmaschine 10 auch weitere Benutzerschnittstellen aufweisen. Die Waschmaschine 10 umfasst weiterhin eine Einspüleinrichtung 11, welche eine Einspülschublade 12 umfasst.

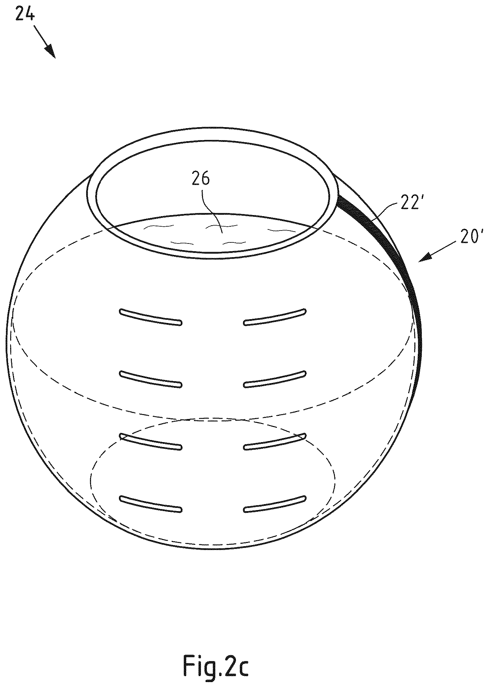

Fig. 2b zeigt eine vergrößerte Ansicht der Einspülschublade 12. Die Einspülschublade 12 weist in diesem Fall drei Fächer 14, 16, 18 auf, welche jeweils zur Aufnahme eines Reinigungsmittels (zum Beispiel Reinigungsmittel 26 aus Fig. 2c) ausgebildet sind. Die Fächer 14, 16, 18 sind beispielsweise ein Fach zur Aufnahme eines Waschmittels für einen Vorwaschgang, ein Fach zur Aufnahme eines Waschmittels für den Hauptwaschgang und ein Fach für die Aufnahme eines Weichspülers. Jedes der Fächer 14, 16, 18 weist eine Fließsperre 14a, 16a, 18a auf. Die Fächer weisen jeweils einen Boden 14b, 16b, 18b und Seitenwände 14c, 16c, 18c auf.

Das Fach 14 der Einspülschublade 12 weist weiterhin eine Sensoreinrichtung 20 mit einem Sensor 22 auf, welcher in diesem Beispiel als Leitfähigkeitssensor mit zwei Elektroden entlang der Seitenwand 14c des Fachs 14 ausgebildet ist. Die Sensoreinrichtung 20 oder jedenfalls ein Teil hiervon ist in die Einspüleinrichtung 11 und somit in die Reinigungsvorrichtung 10 integriert. Die Sensoreinrichtung 20 ist dazu eingerichtet, eine Identifikationscharakteristik, in diesem Fall repräsentativ für eine Leitfähigkeit des Reinigungsmittels, zu ermitteln. Die Sensoreinrichtung 20 kann jedoch alternativ oder zusätzlich auch Sensoren zum Ermitteln einer Identifikationscharakteristik repräsentativ für andere physikalische oder chemische Eigenschaften des Reinigungsmittels umfassen. Insofern können alternativ oder zusätzlich auch ein oder mehrere andere Sensoren, beispielsweise ein optischer Sensor, ein Schall-Sensor, und/oder ein Gassensor vorgesehen sein.

Ebenfalls ist es möglich, die Sensoreinrichtung 20 zur Ermittlung einer Identifikationscharakteristik in einer Vorratskammer (beispielsweise eine in die Reinigungsvorrichtung 10 einsetzbare Kartusche) oder einem (automatischen) Dosiersystem, vorzusehen.

Eine in die Reinigungsvorrichtung 10 integrierte Sensoreinrichtung kann beispielsweise an eine BUS-Leitung der Reinigungsmaschine 10 angeschlossen sein oder drahtlos mit der Reinigungsvorrichtung 10 kommunizieren.

Ebenfalls kann eine Sensoreinrichtung zur Ermittlung der Identifikationscharakteristik extern von der Reinigungsvorrichtung vorgesehen werden, beispielsweise in einer Dosierhilfe. Hierzu zeigt Fig. 2c eine schematische Darstellung eines Ausführungsbeispiels einer Dosierhilfe 24. Die Dosierhilfe ist als Messbehältnis aus Kunststoff ausgebildet und ist teilweise mit einem Reinigungsmittel 26 gefüllt. Die Dosierhilfe weist eine Sensoreinrichtung 20' mit einem Sensor 22' zur Ermittlung einer Identifikationscharakteristik auf. Der Sensor 22' kann, wie oben beschrieben, ein Leitfähigkeitssensor sein. Ebenfalls können jedoch auch ein oder mehrere andere Sensoren zum Einsatz kommen.

Die Sensoreinrichtung 20' kann in diesem Fall drahtlos mit der Reinigungsvorrichtung 10 und/oder dem Mobilgerät 30 kommunizieren und insbesondere eine ermittelte Identifikationscharakteristik des Reinigungsmittels senden.

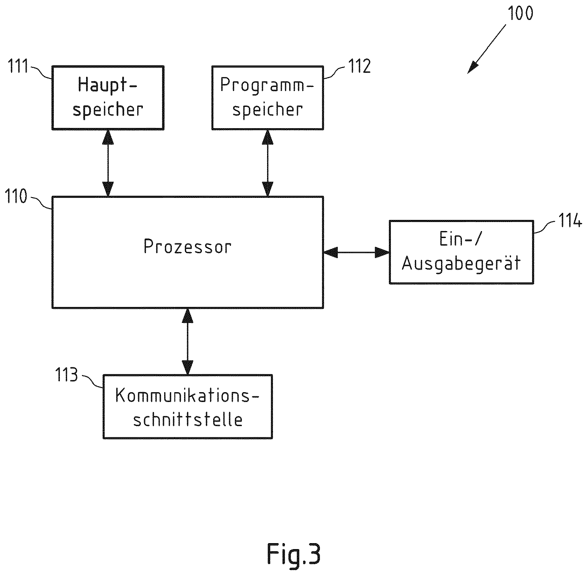

Fig. 3 zeigt ein Blockdiagramm eines Ausführungsbeispiels einer Vorrichtung 100, welche insbesondere ein beispielhaftes Verfahren gemäß dem ersten Aspekt ausführen kann. Die Vorrichtung 100 ist beispielsweise eine Vorrichtung gemäß dem ersten Aspekt, beispielsweise die Reinigungsvorrichtung 10, das Mobilgerät 30 oder der Server 40. Ebenfalls können einzelne oder alle dargestellten Komponenten jedoch beispielsweise auch in die Einspüleinrichtung 10 oder in die Dosiereinrichtung 24 implementiert sein.

Die Vorrichtung 100 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 110 der Vorrichtung 100 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 110 führt Programmanweisungen aus, die in Programmspeicher 112 gespeichert sind, und speichert beispielsweise Zwischenergebnisse oder ähnliches in Arbeits- oder Hauptspeicher 111. Zum Beispiel ist Programmspeicher 112 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 111 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 112 ist vorzugsweise ein lokaler mit der Vorrichtung 100 fest verbundener Datenträger. Mit der Vorrichtung 100 fest verbundene Datenträger sind beispielsweise Festplatten, die in die Vorrichtung 100 eingebaut sind. Alternativ kann der Datenträger beispielsweise auch ein mit der Vorrichtung 100 trennbar verbindbarer Datenträger sein wie ein Speicher-Stick, ein Wechseldatenträger, eine tragbare Festplatte, eine CD, eine DVD und/oder eine Diskette.

Programmspeicher 112 enthält beispielsweise das Betriebssystem von der Vorrichtung 100, das beim Starten der Vorrichtung 100 zumindest teilweise in Hauptspeicher 111 geladen und vom Prozessor 110 ausgeführt wird. Insbesondere wird beim Starten von Vorrichtung 100 zumindest ein Teil des Kerns des Betriebssystems in den Hauptspeicher 111 geladen und von Prozessor 110 ausgeführt. Das Betriebssystem von Vorrichtung 100 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 100 zur Datenverarbeitung. Es verwaltet beispielsweise Betriebsmittel wie Hauptspeicher 111 und Programmspeicher 112, Kommunikationsschnittstelle 113, Ein- und Ausgabegerät 114, stellt unter anderem durch Programmierschnittstellen anderen Programmen grundlegende Funktionen zur Verfügung und steuert die Ausführung von Programmen.

Prozessor 110 steuert die Kommunikationsschnittstelle 113, welche beispielsweise eine Netzwerkschnittstelle sein kann und als Netzwerkkarte, Netzwerkmodul und/oder Modem ausgebildet sein kann. Die Kommunikationsschnittstelle 113 ist insbesondere dazu eingerichtet, eine Verbindung der Vorrichtung 100 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 113 kann beispielsweise Daten (über das Kommunikationssystem) empfangen und an Prozessor 110 weiterleiten und/oder Daten von Prozessor 110 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 110 zumindest ein Ein-/Ausgabegerät 114 steuern. Ein-/Ausgabegerät 114 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 114 kann beispielsweise Eingaben eines Benutzers aufnehmen und an Prozessor 110 weiterleiten und/oder Informationen für den Benutzer von Prozessor 110 empfangen und ausgeben.

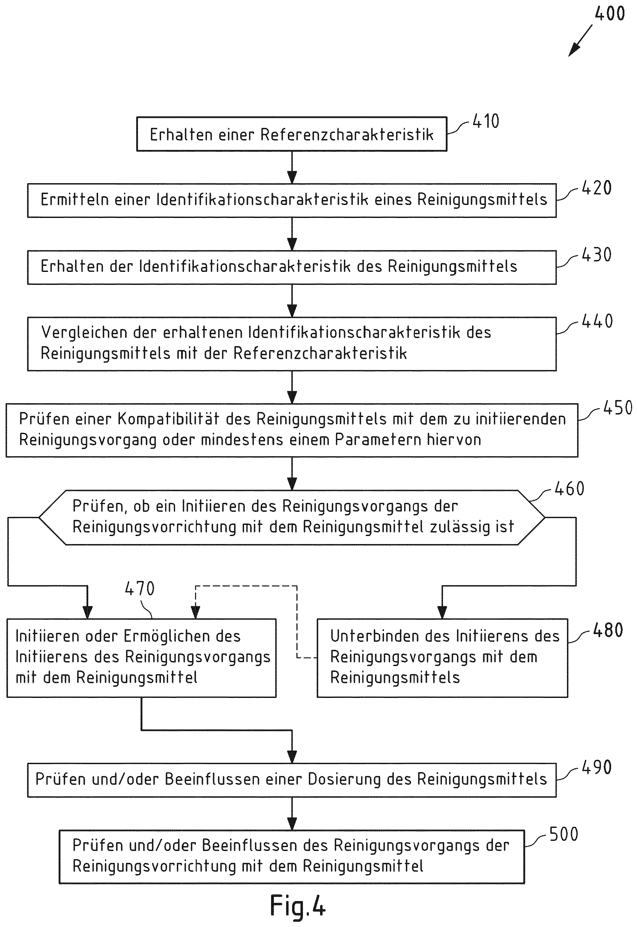

Fig.4 zeigt ein Ablaufdiagramm 400 eines Ausführungsbeispiels eines Verfahrens gemäß der Erfindung.

Zunächst wird eine Referenzcharakteristik erhalten (Aktion 410). Beispielsweise werden ein oder mehrere Datensätze mit einer oder mehreren Referenzcharakteristiken erhalten. Beispielsweise ist die Referenzcharakteristik in einem Speicher der Reinigungsvorrichtung und/oder des Mobilgeräts 30 gespeichert. Beispielsweise ist die zumindest eine Referenzcharakteristik auf dem Server 40 gespeichert und wird von diesem gesendet und von der Reinigungsvorrichtung 10 und/oder Mobilgerät 30 empfangen.

Beispielsweise kann die Referenzcharakteristik bei Bedarf aktualisiert werden. Beispielsweise ist der Server ein Server der Reinigungsmittelhersteller. Sollte sich das Reinigungsmittel und damit die Referenzcharakteristik ändern, kann der Server 40 der Reinigungsvorrichtung 10 und/oder dem Mobilgerät 30 eine aktualisierte Referenzcharakteristik zur Verfügung stellen.

Mittels einer Sensoreinrichtung, etwa der Sensoreinrichtung 20 oder 20', wird eine Identifikationscharakteristik eines Reinigungsmittels, etwa Reinigungsmittel 26, ermittelt (Aktion 420).

Die ermittelte Identifikationscharakteristik des Reinigungsmittels kann beispielsweise durch die Reinigungsvorrichtung 10, das Mobilgerät 30 und/oder den Server 40 erhalten werden (Aktion 430).

Anschließend kann die erhaltene Identifikationscharakteristik des Reinigungsmittels mit der Referenzcharakteristik verglichen werden (Aktion 440). Hierdurch kann das Reinigungsmittel identifiziert werden (beispielsweis das Reinigungsmittel A des Herstellers X) und/oder das Reinigungsmittel zu einer Reinigungsmittelgruppe zugeordnet werden (beispielsweise ein Reinigungsmittel zum Zweck B oder ein Reinigungsmittel des Herstellers Y oder ein Reinigungsmittel der Art C).

Da auf Basis der erhaltenen Identifikationscharakteristik das Reinigungsmittel oder eine Reinigungsmittelgruppe identifiziert werden konnte, kann bei Bedarf zusätzlich ein Prüfen einer Kompatibilität des Reinigungsmittels mit dem zu initiierenden Reinigungsvorgang oder mindestens einem Parametern hiervon (etwa der eingestellten Temperatur oder dem Waschprogramm) erfolgen (Aktion 450).

Es kann nun geprüft werden, zumindest teilweise basierend auf der erhaltenen Identifikationscharakteristik des Reinigungsmittels, ob ein Initiieren des Reinigungsvorgangs der Reinigungsvorrichtung mit dem Reinigungsmittel zulässig ist (Aktion 460).

Falls das Prüfen ergibt, dass das Initiieren es Reinigungsvorgangs der Reinigungsvorrichtung mit dem Reinigungsmittel zulässig ist, kann der Reinigungsvorgangs mit dem Reinigungsmittel initiiert werden oder ein solches Initiieren ermöglicht werden (Aktion 470). Beispielsweise ist ein Initiieren des Reinigungsvorgangs zulässig, wenn ein bestimmtes Reinigungsmittel identifiziert wurde, wenn eine bestimmte Reinigungsmittelgruppe identifiziert wurde, der das Reinigungsmittel zuzuordnen ist, oder wenn eine Kompatibilität festgestellt wurde.

Falls das Prüfen ergibt, dass das Initiieren des Reinigungsvorgangs der Reinigungsvorrichtung mit dem Reinigungsmittel unzulässig ist, kann das Initiieren des Reinigungsvorgangs mit dem Reinigungsmittel unterbunden werden (Aktion 480). Beispielsweise ist ein Initiieren des Reinigungsvorgangs unzulässig, wenn ein bestimmtes Reinigungsmittel nicht identifiziert wurde, wenn eine bestimmte Reinigungsmittelgruppe nicht identifiziert wurde, der das Reinigungsmittel zuzuordnen ist oder wenn keine Kompatibilität festgestellt wurde.

Das Unterbinden des Initiierens des Reinigungsvorgangs kann jedoch nur zeitweise erfolgen. Beispielsweise kann ein Initiieren oder Ermöglichen des Initiierens des Reinigungsvorgangs mit dem Reinigungsmittel trotzdem erfolgen, nachdem ein Unterbinden des Initiierens des Reinigungsvorgangs mit dem Reinigungsmittel erfolgt ist. Auf diese Weise kann der Benutzer notfalls trotzdem die Möglichkeit eines Initiierens des Reinigungsvorgangs bekommen, oder eine eigentlich nicht zulässige Kombination von Reinigungsmittel und Reinigungsvorgang verwenden.

Da auf Basis der erhaltenen Identifikationscharakteristik das Reinigungsmittel oder eine Reinigungsmittelgruppe identifiziert werden konnte, können beispielsweise Dosierungsinformationen für das entsprechende Reinigungsmittel erhalten und verwendet werden, um eine Dosierung des Reinigungsmittels zu prüfen oder zu beeinflussen (Aktion 490).

Ebenfalls kann der Reinigungsvorgang der Reinigungsvorrichtung mit dem Reinigungsmittel geprüft oder beeinflusst werden (Aktion 500). Durch das auf Basis der Identifikationscharakteristik identifizierte Reinigungsmittel oder die identifizierte Reinigungsmittelgruppe, können beispielsweise Parameter des Reinigungsvorgangs daraufhin überprüft werden, ob diese kompatibel oder optimal sind oder es können kompatible oder optimale Parameter eingestellt werden.

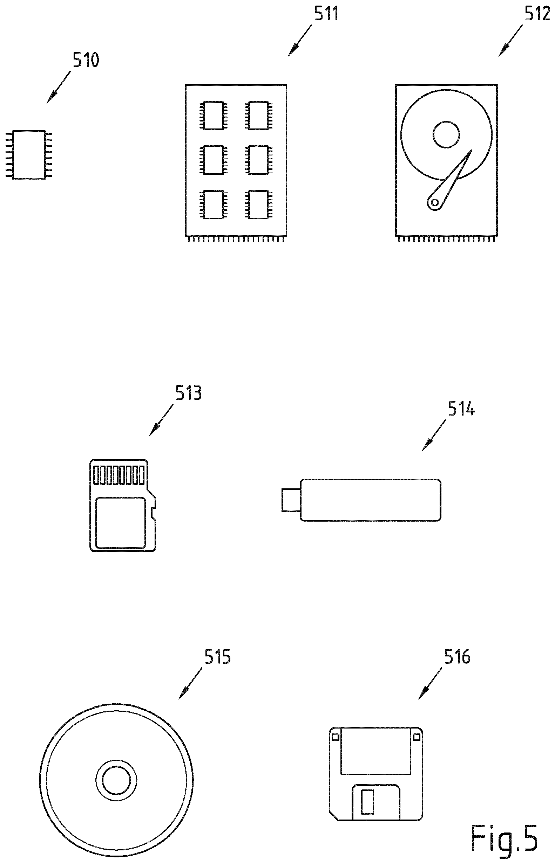

Fig.5 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 110 der Fig. 3) sein, beispielsweise ein (nicht-flüchtiger oder flüchtiger) Programmspeicher des Prozessors oder ein Teil davon (wie Programmspeicher 112 in Fig. 3). Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Identifikation eines Reinigungsmittels für eine Reinigungsvorrichtung (10), durchgeführt von zumindest einer Vorrichtung, das Verfahren umfassend:
- Ermitteln (420) einer Identifikationscharakteristik eines Reinigungsmittels (26), wobei das Ermitteln der Identifikationscharakteristik durch eine Sensoreinrichtung (20, 20') erfolgt, wobei die Sensoreinrichtung ausgewählt aus der Liste umfassend: einen Leitfähigkeitssensor, einen Gassensor, einen Schall-Sensor ist,
- Prüfen (460), zumindest teilweise basierend auf der erhaltenen Identifikationscharakteristik des Reinigungsmittels (26), ob ein Initiieren eines Reinigungsvorgangs der Reinigungsvorrichtung (10) mit dem Reinigungsmittel (26) zulässig ist, wobei das Prüfen ein Prüfen einer Kompatibilität des Reinigungsmittels mit dem zu initiierenden Reinigungsvorgang oder mindestens einem Parametern hiervon umfasst.

2. Verfahren nach Anspruch 1, das Verfahren weiterhin umfassend:
- Unterbinden (480) des Initiierens des Reinigungsvorgangs mit dem Reinigungsmittel (26), falls das Prüfen ergibt, dass das Initiieren des Reinigungsvorgangs der Reinigungsvorrichtung mit dem Reinigungsmittel (26) unzulässig ist, und/oder
- Initiieren oder Ermöglichen des Initiierens (470) des Reinigungsvorgangs mit dem Reinigungsmittel (26), falls das Prüfen ergibt, dass das Initiieren des Reinigungsvorgangs der Reinigungsvorrichtung mit dem Reinigungsmittel (26) zulässig ist.

3. Verfahren nach Anspruch 1 oder 2, das Verfahren weiterhin umfassend:
- Vergleichen (440) der erhaltenen Identifikationscharakteristik des Reinigungsmittels (26) mit zumindest einer Referenzcharakteristik.

4. Verfahren nach einem der Ansprüche 1 bis 3, wobei die Sensoreinrichtung ferner umfasst zumindest einen optischen Sensor oder einen hyperspektralen Sensor.

5. Verfahren nach einem der Ansprüche 1 bis 3, wobei das Ermitteln der Identifikationscharakteristik durch eine Sensoreinrichtung (20, 20') einer Reinigungsvorrichtung (10) oder eines Teils hiervon (11) oder einer Dosierhilfe (24) erfolgt.

6. Verfahren nach einem der Ansprüche 1 bis 5, wobei die Identifikationscharakteristik eine Identifikation
- des Reinigungsmittels (26) und/oder
- einer Reinigungsmittelgruppe,
erlaubt.

7. Verfahren nach einem der Ansprüche 1 bis 6, wobei die Identifikationscharakteristik repräsentativ für zumindest eine chemische und/oder physikalische Eigenschaft des Reinigungsmittels (26) ist.

8. Verfahren nach einem der Ansprüche 1 bis 7, wobei die Identifikationscharakteristik repräsentativ für eine spektrale Eigenschaft und/oder eine elektrische Leitfähigkeit des Reinigungsmittels (26) ist.

9. Verfahren nach einem der Ansprüche 1 bis 8, wobei das Reinigungsmittel (26) einen oder mehrere Zusätze zum Herbeiführen der Identifikationscharakteristik enthält, wobei der eine oder die mehrere Zusätze umfassen:
- einen chemischen Marker,
- einen Farbstoff,
- einen funktionellen Farbstoff,
- einen Riechstoff, und/oder
- einen die Leitfähigkeit ändernden Stoff.

10. Verfahren nach einem der Ansprüche 1 bis 9, das Verfahren weiterhin umfassend:
- Initiieren oder Ermöglichen des Initiierens (470) des Reinigungsvorgangs mit dem Reinigungsmittel (26), nachdem ein Unterbinden (480) des Initiierens des Reinigungsvorgangs mit dem Reinigungsmittel (26) erfolgt ist.

11. Verfahren nach einem der Ansprüche 1 bis 10, das Verfahren weiterhin umfassend:
- Prüfen (450) einer Kompatibilität des Reinigungsmittels (26) mit dem zu initiierenden Reinigungsvorgang oder mindestens einem Parameter hiervon zumindest teilweise basierend auf der erhaltenen Identifikationscharakteristik.

12. Verfahren nach einem der Ansprüche 1 bis 11, das Verfahren weiterhin umfassend:
- Prüfen und/oder Beeinflussen (500) des Reinigungsvorgangs der Reinigungsvorrichtung mit dem Reinigungsmittel (26), zumindest teilweise basierend auf der erhaltenen Identifikationscharakteristik des Reinigungsmittels (26).

13. Verfahren nach einem der Ansprüche 1 bis 12, das Verfahren weiterhin umfassend:
- Prüfen und/oder Beeinflussen (490) einer Dosierung des Reinigungsmittels (26), zumindest teilweise basierend auf der erhaltenen Identifikationscharakteristik des Reinigungsmittels (26).

14. Vorrichtung, umfassend eine Sensoreinrichtung (20, 20'), zumindest einen Prozessor (110) und zumindest einen Speicher (111, 112) mit Computerprogrammcode, wobei der zumindest eine Speicher (111, 112) und der Computerprogrammcode dazu eingerichtet sind, mit dem zumindest einen Prozessor (110), zumindest ein Verfahren nach einem der Ansprüche 1 bis 13 auszuführen und/oder zu steuern

15. Computerprogrammprodukt, das Programmanweisungen umfasst, die einen Prozessor (110) zur Ausführung und/oder Steuerung eines Verfahrens nach einem der Ansprüche 1 bis 13 veranlassen, wenn das Computerprogramm auf dem Prozessor (110) läuft.

## Claims

1. A method for identifying a cleaning agent for a cleaning device (10), which method is carried out by at least one device and comprises:
- determining (420) an identification characteristic of a cleaning agent (26), wherein the identification characteristic is determined by a sensor apparatus (20, 20'), wherein the sensor apparatus is selected from the list comprising: a conductivity sensor, a gas sensor and a sound sensor,
- checking (460), based at least in part on the obtained identification characteristic of the cleaning agent (26), whether an initiation of a cleaning process of the cleaning device (10) using the cleaning agent (26) is permissible, wherein the check includes checking a compatibility of the cleaning agent with the cleaning process to be initiated or at least one parameter thereof.

2. The method according to claim 1, the method further comprising:
- preventing (480) the initiation of the cleaning process using the cleaning agent (26) if the check indicates that the initiation of the cleaning process of the cleaning device using the cleaning agent (26) is not permissible, and/or
- initiating or allowing the initiation (470) of the cleaning process using the cleaning agent (26) if the check indicates that the initiation of the cleaning process of the cleaning device using the cleaning agent (26) is permissible.

3. The method according to claim 1 or 2, the method further comprising:
- comparing (440) the obtained identification characteristic of the cleaning agent (26) with at least one reference characteristic.

4. The method according to one of claims 1 to 3, wherein the sensor apparatus further comprises at least one optical sensor or one hyperspectral sensor.

5. The method according to one of claims 1 to 3, wherein the identification characteristic is determined by a sensor apparatus (20, 20') of a cleaning device (10) or a part thereof (11) or by a sensor apparatus of a dosing aid (24).

6. The method according to one of claims 1 to 5, wherein the identification characteristic allows identification
- of the cleaning agent (26) and/or
- of a cleaning agent group.

7. The method according to one of claims 1 to 6, wherein the identification characteristic is representative of at least one chemical and/or physical property of the cleaning agent (26).

8. The method according to one of claims 1 to 7, wherein the identification characteristic is representative of a spectral property and/or electrical conductivity of the cleaning agent (26).

9. The method according to one of claims 1 to 8, wherein the cleaning agent (26) contains one or more additives for inducing the identification characteristic, wherein the one or more additives comprise:
- a chemical marker,
- a dye,
- a functional dye,
- an odorant, and/or
- a substance that modifies conductivity.

10. The method according to one of claims 1 to 9, the method further comprising:
- initiating or allowing initiation (470) of the cleaning process using the cleaning agent (26) after the initiation of the cleaning process using the cleaning agent (26) has been prevented (480).

11. The method according to one of claims 1 to 10, the method further comprising:
- checking (450) a compatibility of the cleaning agent (26) with the cleaning process to be initiated or at least one parameter thereof, based at least in part on the obtained identification characteristic.

12. The method according to one of claims 1 to 11, the method further comprising:
- checking and/or influencing (500) the cleaning process of the cleaning device using the cleaning agent (26), based at least in part on the obtained identification characteristic of the cleaning agent (26).

13. The method according to one of claims 1 to 12, the method further comprising:
- checking and/or influencing (490) a dosage of the cleaning agent (26), based at least in part on the obtained identification characteristic of the cleaning agent (26).

14. A device comprising a sensor apparatus (20, 20'), at least one processor (110) and at least one memory (111, 112) comprising computer program code, wherein the at least one memory (111, 112) and the computer program code are designed to execute and/or control at least one method according to one of claims 1 to 13 using the at least one processor (110).

15. A computer program product comprising program instructions that prompt a processor (110) to execute and/or control a method according to one of claims 1 to 13 when the computer program runs on the processor (110).

## Revendications

1. Procédé d'identification d'un agent de nettoyage pour un dispositif de nettoyage (10), mis en oeuvre par au moins un dispositif, ledit procédé comprenant :
- la détermination (420) d'une caractéristique d'identification d'un agent de nettoyage (26), dans lequel la détermination de la caractéristique d'identification est effectuée par un appareil capteur (20, 20'), dans lequel l'appareil capteur est sélectionné dans la liste comprenant : un capteur de conductivité, un capteur de gaz, un capteur de son,
- la vérification (460), sur la base, au moins partiellement, de la caractéristique d'identification de l'agent de nettoyage (26) obtenue, du fait de savoir si le lancement d'un processus de nettoyage du dispositif de nettoyage (10) avec l'agent de nettoyage (26) est autorisé, dans lequel la vérification comprend la vérification de la compatibilité de l'agent de nettoyage avec le processus de nettoyage à lancer ou avec au moins un paramètre de celui-ci.

2. Procédé selon la revendication 1, ledit procédé comprenant en outre :
- la désactivation (480) du lancement du processus de nettoyage avec l'agent de nettoyage (26) si la vérification indique que le lancement du processus de nettoyage du dispositif de nettoyage avec l'agent de nettoyage (26) n'est pas autorisé, et/ou
- le lancement ou l'activation du lancement (470) du processus de nettoyage avec l'agent de nettoyage (26) si la vérification indique que le lancement du processus de nettoyage du dispositif de nettoyage avec l'agent de nettoyage (26) est autorisé.

3. Procédé selon la revendication 1 ou 2, ledit procédé comprenant en outre :
- la comparaison (440) de la caractéristique d'identification de l'agent de nettoyage (26) obtenue avec au moins une caractéristique de référence.

4. Procédé selon l'une quelconque des revendications 1 à 3, dans lequel l'appareil capteur comprend en outre au moins un capteur optique ou un capteur hyperspectral.

5. Procédé selon l'une quelconque des revendications 1 à 3, dans lequel la détermination de la caractéristique d'identification est effectuée par un appareil capteur (20, 20') d'un dispositif de nettoyage (10) ou d'une partie (11) de celui-ci ou d'une aide au dosage (24).

6. Procédé selon l'une quelconque des revendications 1 à 5, dans lequel la caractéristique d'identification permet une identification
- de l'agent de nettoyage (26) et/ou
- d'un groupe d'agents de nettoyage.

7. Procédé selon l'une quelconque des revendications 1 à 6, dans lequel la caractéristique d'identification représente au moins une propriété chimique et/ou physique de l'agent de nettoyage (26).

8. Procédé selon l'une quelconque des revendications 1 à 7, dans lequel la caractéristique d'identification représente une propriété spectrale et/ou une conductivité électrique de l'agent de nettoyage (26).

9. Procédé selon l'une quelconque des revendications 1 à 8, dans lequel l'agent de nettoyage (26) contient au moins un additif permettant d'induire la caractéristique d'identification, dans lequel l'au moins un additif comprend :
- un marqueur chimique,
- un colorant,
- un colorant fonctionnel,
- un parfum, et/ou
- une substance modifiant la conductivité.

10. Procédé selon l'une quelconque des revendications 1 à 9, ledit procédé comprenant en outre :
- le lancement ou l'activation du lancement (470) du processus de nettoyage avec l'agent de nettoyage (26) après que la désactivation (480) du lancement du processus de nettoyage avec l'agent de nettoyage (26) a été effectuée.

11. Procédé selon l'une quelconque des revendications 1 à 10, ledit procédé comprenant en outre :
- la vérification (450) d'une compatibilité de l'agent de nettoyage (26) avec le processus de nettoyage à lancer ou l'au moins un paramètre de celui-ci sur la base, au moins partiellement, de la caractéristique d'identification obtenue.

12. Procédé selon l'une quelconque des revendications 1 à 11, ledit procédé comprenant en outre :
- la vérification et/ou l'influence (500) du processus de nettoyage du dispositif de nettoyage avec l'agent de nettoyage (26), sur la base, au moins partiellement, de la caractéristique d'identification de l'agent de nettoyage (26) obtenue.

13. Procédé selon l'une quelconque des revendications 1 à 12, ledit procédé comprenant en outre :
- la vérification et/ou l'influence (490) d'un dosage de l'agent de nettoyage (26), sur la base, au moins partiellement, de la caractéristique d'identification de l'agent de nettoyage (26) obtenue.

14. Dispositif, comprenant un appareil capteur (20, 20'), au moins un processeur (110) et au moins une mémoire (111, 112) comportant un code de programme informatique, dans lequel l'au moins une mémoire (111, 112) et le code de programme informatique sont configurés, à l'aide de l'au moins un processeur (110), pour mettre en œuvre et/ou commander l'au moins un procédé selon l'une quelconque des revendications 1 à 13.

15. Produit de programme informatique comprenant des instructions de programme, lesquelles amènent un processeur (110) à mettre en œuvre et/ou à commander un procédé selon l'une quelconque des revendications 1 à 13 lorsque le programme informatique est exécuté sur le processeur (110).
